# EUROPÄISCHE PATENTANMELDUNG

(11) **EP 4 715 789 A1**
(43) Veröffentlichungstag der Anmeldung: **25.03.2026**
(21) Anmeldenummer: 24202114.5
(22) Anmeldetag: 24.09.2024
(51) Int. Cl.: G09F 3/00, A01G 23/099, G06K 19/077, G09F 3/04, G09F 3/18, G09F 3/20, G09F 7/18

(54) **MARKIERUNGSELEMENT**

(71) Anmelder: Latschbacher GmbH, 4484 Kronstorf (AT)
(72) Erfinder: Latschbacher, Klaus, 4484 Kronstorf (AT)
(74) Vertreter: Patentanwälte Magenbauer & Kollegen Partnerschaft mbB

(57) **Zusammenfassung**

Die Erfindung betrifft ein Markierungselement (1; 51) für Baumstämme, mit einer Grundplatte (2; 52), die eine Schlagfläche (3) und eine der Schlagfläche (3) abgewandte Schneidenfläche (4) aufweist, wobei eine Schneide (8) von der Schneidenfläche (4) abragt und wobei an der Grundplatte (2; 52) ein elektronischer Informationsträger (31) angebracht ist, der einen Speicherbaustein (35) und eine Antenne (36) aufweist, die elektrisch mit dem Speicherbaustein (35) verbunden ist. Erfindungsgemäß ist vorgesehen, dass die Antenne (36) einen Antennenabschnitt (44) aufweist, der seitlich über die Schlagfläche (3) und über die Schneidenfläche (4) abragt.

## Beschreibung

Die Erfindung betrifft ein Markierungselement für Baumstämme, mit einer Grundplatte, die eine Schlagfläche und eine der Schlagfläche abgewandte Schneidenfläche aufweist, wobei eine Schneide von der Schneidenfläche abragt und wobei an der Grundplatte ein elektronischer Informationsträger angebracht ist, der einen Speicherbaustein und eine Antenne aufweist, die elektrisch mit dem Speicherbaustein verbunden ist.

Aus der EP 1246152 A1 ist ein Signierelement zum Kennzeichnen von Holz, insbesondere von Baumstämmen, bekannt, das einen plättchenartigen Signierkörper aufweist, an dem mindestens ein Befestigungsteil zur Befestigung des Signierelements am zu signierenden Holz angeordnet ist. Weiterhin ist am Signierkörper zur Signatur ein einen Datenspeicher aufweisender Transponder zur drahtlosen Datenübertragung vorgesehen. Hierdurch kann eine Vielzahl von Daten drahtlos gespeichert und ausgelesen werden, ohne dass ein Sichtkontakt erforderlich wäre.

Die Aufgabe der Erfindung besteht darin, ein drahtlos auslesbares Markierungselement für Baumstämme bereitzustellen, mit dem ein Auslesen des Speicherbausteins auch unter schwierigen Randbedingungen ermöglicht ist.

Diese Aufgabe wird für ein Markierungselement der eingangs genannten Art dadurch gelöst, dass die Antenne einen Antennenabschnitt aufweist, der seitlich über die Schlagfläche und über die Schneidenfläche abragt. Während bei dem Signierelement, das aus dem Stand der Technik bekannt ist, eine Grundfläche der Antenne kleiner als eine Grundfläche des Signierkörpers gewählt ist, erstreckt sich bei dem erfindungsgemäßen Markierungselement die Antenne zumindest bereichsweise über die Grundplatte hinaus. Hierdurch wird die wirksame Antennenfläche im Vergleich zum Stand der Technik vergrößert, so dass eine drahtlose Kommunikation zwischen dem Markierungselement und einem zum Auslesen des Markierungselements vorgesehenen Sende- und Lesegerät auch unter schwierigen Einsatzbedingungen zuverlässig gewährleistet werden kann. Beispielhaft werden durch die gegenüber dem Stand der Technik vergrößerte Antennenfläche und die Reduzierung von elektromagnetischen Abschattungen der Antenne durch die Grundplatte die drahtlose Einkopplung von Energie, die vom Sende- und Lesegerät bereitgestellt wird, auf die Antenne und damit auf den elektronischen Informationsträger erleichtert. Ferner wird auch die Aussendung von elektromagnetischen Signalen, die vom elektronischen Informationsträger an das Sende- und Lesegerät zur Verfügung gestellt werden sollen, verbessert.

Diese vorteilhaften Effekte werden dadurch erzielt, dass die Antenne derart beschaffen ist, dass sie bei einer Projektion auf eine Projektionsebene, die von einer größten Oberfläche, insbesondere der Schlagfläche, des Markierungselements, bestimmt wird, wenigstens in einer Raumrichtung größer als eine Projektion dieser größten Oberfläche auf die Projektionsebene ist. Durch das seitliche Abragen des wenigstens einen Antennenabschnitts über die Schlagfläche hinaus sowie über die Schneidenfläche hinaus kann eine vorteilhafte Dimensionierung der Antenne durchgeführt werden, die zumindest in gewissen Grenzen unabhängig von der Geometrie der Grundplatte ist. Beispielhaft ist vorgesehen, dass eine Erstreckung der Antenne in der Projektionsebene einem 1,2-fachen bis 1,7-fachen einer Erstreckung der Grundplatte in der Projektionsebene beträgt. Bei einem nur einseitig vorgesehenen Antennenabschnitt ragt dieser beispielhaft um 20 bis 150 Prozent der Erstreckung der Grundplatte in der entsprechenden Raumrichtung über die Grundplatte hinaus. Bei beidseitig vorgesehenen Antennenabschnitten ragen diese beispielhaft jeweils um 10 bis 100 Prozent der Erstreckung der Grundplatte in der entsprechenden Raumrichtung über die Grundplatte hinaus.

Zudem wird durch das seitliche Abragen der Antenne erreicht, dass die Antenne im Einsatzfall, also bei Anbringung des Markierungselements an einer Schnittfläche eines Baumstamms, nicht wie beim vorgenannten Stand der Technik von der Grundplatte des Markierungselements abgeschattet wird. Hierdurch wird die Durchführung eines kontaktlosen Auslesevorgangs für das Markierungselement mit Hilfe eines geeigneten Sende- und Lesegeräts verbessert.

Vorteilhafte Weiterbildungen der Erfindung sind Gegenstand der Unteransprüche.

Zweckmäßig ist es, wenn der Informationsträger eine Trägerfolie umfasst, wobei der Speicherbaustein und die Antenne auf die Trägerfolie aufgebracht sind. Beispielhaft handelt es sich bei der Antenne um eine dünne, elektrisch leitende Schicht, die auf die Trägerfolie aufgebracht ist. Rein exemplarisch ist die Trägerfolie als Kunststofffolie ausgebildet, auf die eine Metallfolie aufgebracht wird, wobei die Metallfolie beispielsweise in einem fotolithographischen Prozess strukturiert wird, um die Antenne zu bilden. Bevorzugt weist die Antenne elektrische Kontaktflächen auf, mit denen der, insbesondere als Halbleiterelement ausgebildete, Speicherbaustein elektrisch verbunden werden kann. Beispielhaft ist vorgesehen, dass der Speicherbaustein auf eine der Kontaktflächen der Antenne elektrisch leitend aufgesetzt wird, insbesondere aufgeklebt wird, und über eine Drahtbondverbindung elektrisch leitend mit einer zweiten Kontaktfläche der Antenne verbunden wird. Bevorzugt ist vorgesehen, dass der elektronische Informationsträger zumindest abseits des Speicherbausteins flexibel ausgeführt ist und je nach Bedarf gekrümmt oder gar geknickt werden kann, ohne dass dadurch die Funktion des elektronische Informationsträgers beeinträchtigt wird. Der Speicherbaustein kann auch als integraler Bestandteil der Antenne ausgebildet sein, wobei die elektrische Funktion des Speicherbausteins beispielswiese durch individuell für jeden Informationsträger abgestimmte Leiterbahnabschnitte verwirklicht werden kann. Der Speicherbaustein kann in analoger Schaltungstechnik oder in digitaler Schaltungstechnik oder in einer Mischbauweise aus analoger und digitaler Schaltungstechnik verwirklicht werden.

Bevorzugt ist vorgesehen, dass der Speicherbaustein und die Antenne zwischen der Trägerfolie und einer Abdeckfolie angeordnet sind. Durch die Abdeckfolie, bei der es sich in gleicher Weise wie bei der Trägerfolie um eine Kunststofffolie handeln kann, wird die Robustheit des elektronischen Informationsträgers sowohl im Hinblick auf mechanische Einflüsse als auch im Hinblick auf chemische Einflüsse wie beispielsweise einer Beaufschlagung mit Feuchtigkeit, verbessert. Besonders bevorzugt ist vorgesehen, dass die Trägerfolie zumindest bereichsweise stoffschlüssig mit der Abdeckfolie verbunden ist, was beispielsweise durch Verkleben oder Verschweißen der Trägerfolie mit der Abdeckfolie gewährleistet werden kann.

Bei einer Weiterbildung der Erfindung ist vorgesehen, dass an einem Randbereich der Grundplatte eine schlitzförmige Öffnung ausgebildet ist und dass der Informationsträger die schlitzförmige Öffnung durchsetzt. Mit der schlitzförmigen Öffnung kann eine mechanische Zwangsführung für den elektronischen Informationsträger erzielt werden, sodass zumindest der Antennenabschnitt, der über die Grundplatte hinausragt, in einer vorteilhaften räumlichen Ausrichtung zur Grundplatte gehalten wird. Dies ist insbesondere dann von Bedeutung, wenn bei einer praktischen Einsatz des Markierungselement vorgesehen ist, eine Vielzahl von Markierungselementen in gestapelte Anordnung zeitweilig in einem Magazin aufzunehmen, wobei hierbei in Kauf genommen wird, dass die Antennenabschnitte der Markierungselemente zumindest elastisch deformiert werden. Nach Entnehmen des jeweiligen Markierungselements aus dem Magazin und dem Einschlagen des Markierungselements in einer Schnittfläche eines Baumstamms wird durch die schlitzförmige Öffnung und die dadurch bewirkte Zwangsführung für den elektronischen Informationsträger eine vorteilhafte Ausrichtung des Antennenabschnitts gegenüber der Grundplatte und dem Baumstamm gewährleistet. Derjenige Bereich der Antenne, der in der schlitzförmigen Ausnehmung der Grundplatte aufgenommen ist, bildet auch den Beginn des Antennenabschnitts, der über die Grundplatte hinaus seitlich abragt.

In weiterer Ausgestaltung der Erfindung ist vorgesehen, dass die schlitzförmige Öffnung als Ausnehmung mit einer durchgehenden Seitenwand in der Grundplatte ausgebildet ist und einen Abschnitt des Informationsträgers umrahmt. Bei einer derartigen Geometrie der schlitzförmigen Öffnung ist sichergestellt, dass der Informationsträger nicht seitlich aus der schlitzförmigen Öffnung entweichen kann, wodurch eine besonders zuverlässige Positionierung des Informationsträgers gegenüber der Grundplatte gewährleistet werden kann.

Alternativ ist vorgesehen, dass die schlitzförmige Öffnung als seitlich offene Aussparung in der Grundplatte ausgebildet ist und einen Abschnitt des Informationsträgers bereichsweise umgibt. Da hierbei keine vollständige Umrahmung des Informationsträgers vorgesehen ist, kann im Vergleich zu der als Ausnehmung ausgebildeten schlitzförmigen Öffnung von einer erleichterten Montage für den Informationsträger ausgegangen werden.

Zweckmäßig ist es, wenn in der Schlagfläche eine Nut eingebracht ist, in der der Informationsträger angeordnet ist, wobei eine Tiefe der Nut größer als eine Dicke des Informationsträgers ist. Durch diese Nut wird sichergestellt, dass bei der Durchführung des Einschlagvorgangs für das Markierungselement keine Kraftübertragung zwischen einer Stirnfläche eines Einschlaghammers und dem Informationsträger erfolgen. Vielmehr wird die vom ein Schlaghammer bereitgestellte Schlagkraft auf die abseits der Nut ausgebildeten Bereiche der Schlagfläche eingeleitet, sodass eine Beschädigung des Informationsträgers zumindest weitgehend ausgeschlossen werden kann. Die Tiefe der Nut wird durch einen Abstand zwischen einer Nutgrundfläche, an der der Informationsträger festgelegt wird, und der Schlagfläche bestimmt und ist größer als die Dicke des Informationsträgers, also die Erstreckung des Informationsträgers in Richtung des Abstands zwischen Nutgrundfläche und Schlagfläche.

In weiterer Ausgestaltung der Erfindung ist vorgesehen, dass in der Schneidenfläche eine Nut eingebracht ist, in der der Informationsträger angeordnet ist, wobei eine Tiefe der Nut größer als eine Dicke des Informationsträgers ist. Bei einer Einbringung einer Nut in der Schneidenfläche sowie einer Anordnung des Informationsträgers an der Nutgrundfläche dieser Nut wird bei einem bestimmungsgemäßen Gebrauch des Markierungselement ein mechanischer Kontakt zwischen dem Informationsträger und der Stirnfläche des Baumstamms, die mit dem Markierungselement versehen wird, verhindert. Die Tiefe der Nut wird durch einen Abstand zwischen der Nutgrundfläche, an der der Informationsträger festgelegt wird, und der Schneidenfläche bestimmt und ist größer als die Dicke des Informationsträgers, also die Erstreckung des Informationsträgers in Richtung des Abstands zwischen Nutgrundfläche und Schneidenfläche.

Bei einer vorteilhaften Weiterbildung der Erfindung ist vorgesehen, dass der Antennenabschnitt mit der Schlagfläche einen Winkel einschließt, der in einem Intervall zwischen 10 Grad und 70 Grad angesiedelt ist. Hierdurch wird gewährleistet, dass der Antennenabschnitt bei einem bestimmungsgemäßen Gebrauch des Markierungselement zur Kennzeichnung einer Schnittfläche eines Baumstamms auch mit dieser Schnittfläche einen Winkel einschließt, der größer Null ist. Somit wird ein unerwünschtes Anhaften des Antennenabschnitts an der Schnittfläche des Baumstamms, wie es beispielsweise bei einer parallelen Ausrichtung des Antennenabschnitt zur Schlagfläche auftreten könnte, vermieden, bei dem eine erhebliche Reduzierung der elektromagnetischen Wechselwirkung zwischen dem Informationsträger und einem Sende- und Lesegerät auftreten könnte. Eine solche abgewinkelte Ausrichtung des Antennenabschnitts gegenüber der Schnittfläche des Baumstamms ist insbesondere dann von Interesse, wenn die Bedingungen für einen Auslesevorgang beispielsweise durch Regen, Verschmutzungen, Schnee, ohnehin erschwert sind.

Bevorzugt ist vorgesehen, dass von der Schlagfläche mehrere Rasthaken abragen, die für eine formschlüssige Festlegung der Grundplatte an einem Schlaghammer ausgebildet sind. Mit Hilfe der Rasthaken wird das Markierungselement vor der Verarbeitung an einem Einschlaghammer festgelegt, hierzu ist eine umlaufende Nut an einer Außenumfangsfläche des Einschlaghammers vorgesehen, in die die Rasthaken eingreifen können. Bevorzugt ist vorgesehen, dass eine Vielzahl von Markierungselement vor der Verarbeitung in einem Magazin in gestapelter Weise aufgenommen sind und ein Entnehmen eines einzelnen Markierungselements aus dem Magazin durch eine formschlüssige Verrastung der Rasthaken am Einschlaghammer ermöglicht wird.

Vorteilhaft ist es, wenn an der Schneidenfläche eine Zentrierspitze ausgebildet ist, die in einer quer zur Schneidenfläche ausgerichteten Schneidrichtung eine größere Ausdehnung als die Schneide aufweist und dass der Informationsträger mit einer Ausnehmung versehen ist, die von der Zentrierspitze durchsetzt werden kann. Die Aufgabe der wenigstens einen Zentrierspitze besteht darin, bei einem bestimmungsgemäßen Gebrauch des Markierungselements bereits vor einem Eingriff der wenigstens einen an der Schneidfläche ausgebildeten Schneide in die Schnittfläche des Baumstamms eine vorläufige Festlegung des Markierungselements an der Schnittfläche des Baumstamms zu gewährleisten und damit eine vorteilhafte Ausrichtung des Markierungselements gegenüber dem Baumstamm zu unterstützen, damit der anschließende Eingriff der Schneide in die Schnittfläche des Baumstamms möglichst exakt in einer Raumrichtung erfolgt, die einer Schneidrichtung der Schneide entspricht. Hierbei ist vorgesehen, dass die Zentrierspitze in der senkrecht zur Schneidenfläche ausgerichteten Schneidrichtung eine größere Erstreckung als die Schneide aufweist, so dass die Zentrierspitze beim Einschlagvorgang zeitlich vor der Schneide in Eingriff mit der Schnittfläche des Baumstamms gelangt. Besonders bevorzugt ist vorgesehen, dass an der Schneidenfläche wenigstens zwei, insbesondere spiegelbildlich zueinander angeordnete, Schneiden angeordnet sind und dass die wenigstens eine Zentrierspitze mittig zwischen den beiden Schneiden angeordnet ist.

In weiterer Ausgestaltung der Erfindung ist vorgesehen, dass der Speicherbaustein zwei Speicherplätze zur Speicherung von unterschiedlichen Informationen aufweist. Jede der beiden Speicherplätze kann zur Speicherung eine Zeichenkette mit mehreren Zeichen ausgebildet sein. Bevorzugt ist vorgesehen, dass in einem der beiden Speicherplätze eine unveränderliche Zeichenkette gespeichert ist, die eine eineindeutige Kennzeichnung des Informationsträgers darstellt und dass in dem anderen der beiden Speicherplätze eine kontaktlos einschreibbare Zeichenkette gespeichert werden kann, die beispielsweise im Zuge der Montage des Informationsträgers an die Grundplatte beschrieben wird und eine anwendungsspezifische Zeichenkette sein kann.

Zweckmäßig ist es, wenn der Informationsträger als RFID ausgebildet ist. Hierbei ist vorgesehen, dass von einem Schreib- und Lesegerät elektromagnetische Wellen zur Verfügung gestellt werden, die auf eine Empfangswellenlänge der Antenne des elektronischen Informationsträgers abgestimmt sind und die eine kontaktlose Energieeinkopplung über die Antenne auf den Speicherbaustein ermöglichen. Hierdurch können die im Speicherbaustein gespeicherten Informationen über die Antenne kontaktlos an das Schreib- und Lesegerät ausgesendet werden.

Bevorzugt ist vorgesehen, dass die Schlagfläche als Planfläche ausgebildet ist und die Schneidenfläche bereichsweise parallel zur Schlagfläche ausgerichtet ist. Hierbei wird davon ausgegangen, dass der Einschlaghammer eine eben ausgebildete Stirnfläche aufweist, die auf der Schlagfläche aufliegt und somit eine Impulsübertragung auf das Markierungselement ermöglicht. Alternativ ist vorgesehen, dass die Schlagfläche mehrere Flächenbereiche aufweist, die in einer gemeinsamen Ebene liegen und für eine Impulsübertragung vom Einschlaghammer auf das Markierungselement dienen. Dies ist insbesondere dann der Fall, wenn die Schlagfläche mit einer Nut versehen ist, die zur Aufnahme des Informationsträgers ausgebildet ist.

Bei einer vorteilhaften Erfindung ist vorgesehen, dass die Grundplatte als Kunststoffspritzgussteil ausgebildet ist. Hierdurch wird eine kostengünstige Herstellung der Grundplatte ermöglicht. Bevorzugt ist vorgesehen, dass der Informationsträger in einem automatisierten Montageprozess an der Grundplatte festgelegt wird. Hierbei kann insbesondere vorgesehen sein, dass eine Vielzahl von streifenförmig ausgebildeten Informationsträgern als Bandmaterial von einer Rolle abgewickelt werden und im Zuge eines kombinierten Schweiß- und Schneidprozesses mit der jeweiligen Grundplatte verbunden werden.

Vorteilhafte Ausführungsformen der Erfindung sind in der Zeichnung dargestellt. Hierbei zeigt:
- Figur 1: eine streng schematische, perspektivische Draufsicht auf eine erste Ausführungsform eines Markierungselements, das eine Grundplatte und einen daran angebrachten Informationsträger umfasst,
- Figur 2: eine streng schematische, perspektivische Ansicht von unten auf die erste Ausführungsform des Markierungselement,
- Figur 3: eine streng schematische Seitenansicht der ersten Ausführungsform des Markierungselements,
- Figur 4: eine streng schematische Draufsicht auf die Grundplatte der ersten Ausführungsform des Markierungselements,
- Figur 5: eine streng schematische Ansicht von unten auf die Grundplatte der ersten Ausführungsform des Markierungselements,
- Figur 6: eine streng schematische, perspektivische Draufsicht auf eine zweite Ausführungsform eines Markierungselements, das eine Grundplatte und einen daran angebrachten Informationsträger umfasst,
- Figur 7: eine streng schematische Draufsicht auf die Grundplatte der zweiten Ausführungsform des Markierungselements, und
- Figur 8: eine streng schematische Draufsicht auf einen Informationsträger.

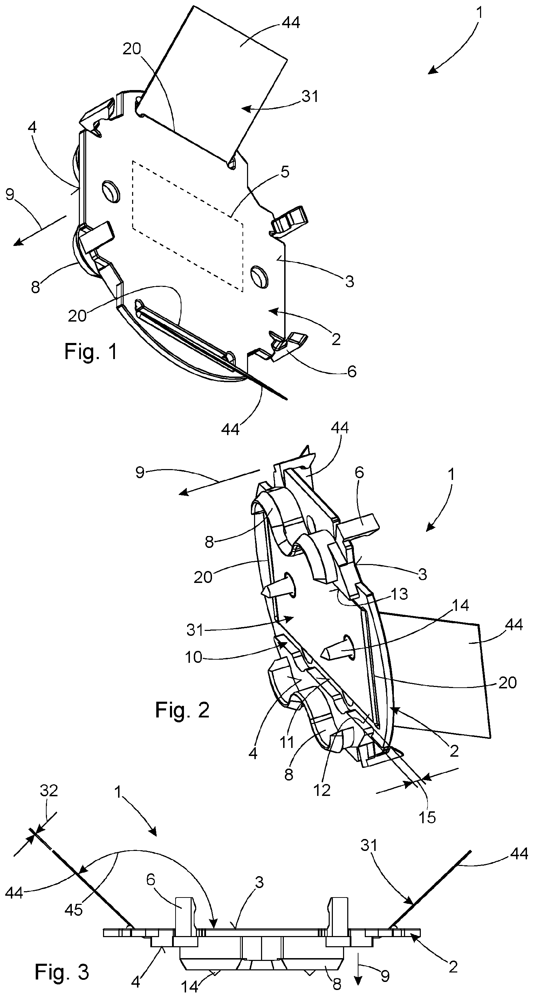

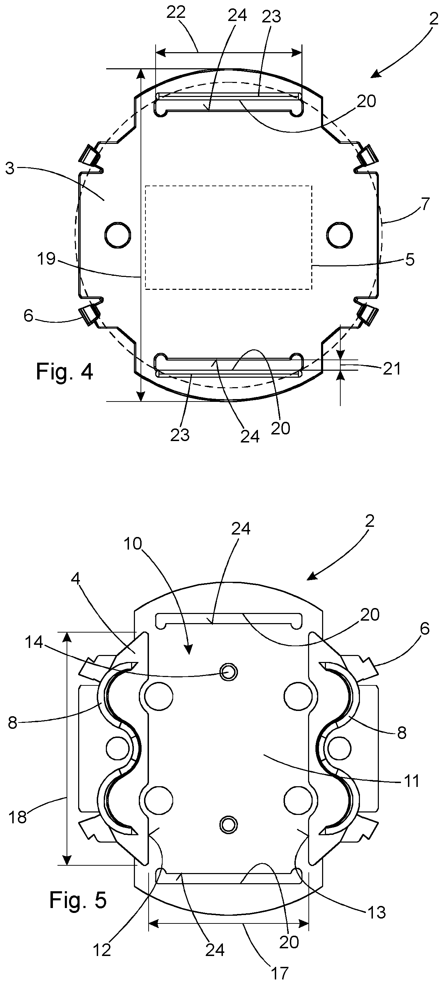

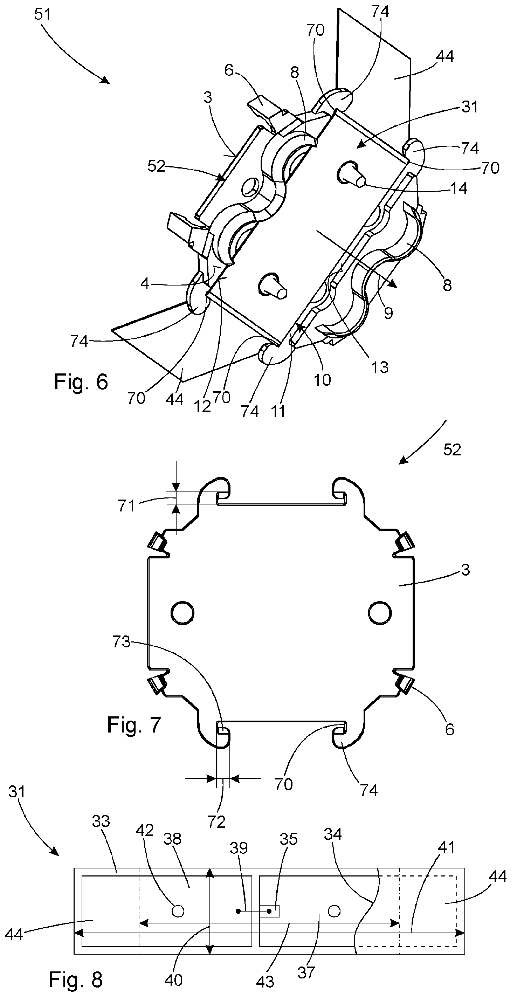

Eine in den Figuren 1 bis 5 in unterschiedlichen Ansichten gezeigte erste Ausführungsform eines Markierungselements 1 und eine in den Figuren 6 und 7 gezeigte zweite Ausführungsform eines Markierungselements 51 sind jeweils zur Markierung von Baumstämmen ausgebildet. Hierzu ist vorgesehen, das jeweilige Markierungselement 1, 51 mit Hilfe eines nicht dargestellten Einschlaghammers vorzugsweise an einer Schnittfläche eines Baumstamms anzubringen. Das Markierungselement 1, 51 kann mit einer unmittelbar von einem Benutzer lesbaren Beschriftung, beispielsweise einer Zeichenfolge von Zahlen und/oder Buchstaben versehen sein, mit denen eine Identifizierung des mit dem Markierungselement 1, 51 versehenen Baumstamms ermöglicht wird. Diese Beschriftung kann insbesondere in einem Schriftfeld 5 angeordnet werden, das rein exemplarisch in den Figuren 1, 4 und 7 dargestellt ist.

Der Vorteil einer unmittelbar vom Benutzer lesbaren Beschriftung liegt darin, dass keine zusätzlichen technischen Einrichtungen wie beispielsweise ein Lesegerät erforderlich sind, um eine Identifikation des jeweiligen Baumstamms vornehmen zu können. Zieht man jedoch die tatsächlichen Einsatzbedingungen in Betracht, unter denen die Handhabung und Weiterverarbeitung von Baumstämmen erfolgt, ist es offensichtlich, dass die zusätzliche Möglichkeit eines kontaktlosen Auslesens von Markierungselement in 1, 51, die an Baumstämmen angebracht sind, erhebliche Vorteile gegenüber einem unmittelbaren Lesevorgang einer Zeichenkette hat. Beispielsweise ist davon auszugehen, dass die im Wald geschlagenen Baumstämme nach einem Transport an einen Lagerplatz zunächst mit den Markierungselementen 1, 51 versehen werden, dann jedoch möglicherweise über einen längeren Zeitraum an dem Lagerplatz verbleiben und dort die Lesbarkeit der Beschriftung durch Verschmutzung oder Schneefall beeinträchtigt wird. Ferner kann sowohl an dem Lagerplatz als auch bei einem nachfolgenden Transport der Baumstämme die Situation eintreten, dass nicht alle Stirnflächen von Baumstämmen, die mit Markierungselementen 1, 51 versehen wurden, direkt zugänglich sind, da sie von anderen Baumstämmen oder in anderer Weise verdeckt werden, sodass auch für diesen Fall ein kontaktloses Auslesen der Markierungselemente 1, 51 vorteilhaft ist.

Dementsprechend sind die Markierungselemente 1, 51 in nachstehend näher beschriebene Weise jeweils mit Informationsträgern 31 versehen, die für einen kontaktlosen Auslesevorgang mit einem nicht dargestellten Sende- und Lesegerät ausgebildet sind.

Da sich die beiden Ausführungsformen von Markierungselementen 1, 51 lediglich im Hinblick auf die mechanische Führung des Informationsträgers 31 unterscheiden, ansonsten aber die gleiche Aufbauweise aufweisen, erfolgt die nachstehende Beschreibung lediglich für das Markierungselement 1, ist jedoch in gleicher Weise für das Markierungselement 51 gültig. Für funktionsgleiche Komponenten werden in allen Figuren die gleichen Bezugszeichen verwendet.

Das Markierungselement 1 umfasst eine vorzugsweise im Kunststoffspritzgussverfahren hergestellte Grundplatte 2 sowie einen daran angebrachten, streifenförmig ausgebildeten und aus einem nachstehend näher beschriebenen Folien-Schichtaufbau gebildeten Informationsträger 31.

Die Grundplatte 2 stellt alle Funktionsbereiche zur Verfügung, die für die mechanische Funktionsfähigkeit des Markierungselements 1 erforderlich sind. Beispielhaft weist die Grundplatte 2 eine eben ausgebildete Schlagfläche 3 auf, die für einen mechanischen Kontakt mit einer Stirnfläche eines nicht dargestellten Einschlaghammers sowie für eine Impulsübertragung von dieser Stirnfläche des Einschlaghammers auf das Markierungselement 1 dient. Ferner kann auf der Schlagfläche 3, insbesondere im Bereich des nur schematisch eingezeichneten Schriftfelds 5 eine unmittelbar optisch ablesbare Beschriftung und/oder ein Barcode und/oder ein QR-Code aufgebracht sein.

Beispielhaft ragen von der Schlagfläche 3 insgesamt vier Rasthaken 6 ab, die jeweils eine größte Ausdehnung in einer Raumrichtung parallel zu einer nicht dargestellten Flächennormale auf die Schlagfläche 3 aufweisen. Jede der zungenförmig ausgebildeten Rasthaken 6 ist endseitig mit einem Vorsprung versehen, der ungefähr in Richtung einer gegenüberliegenden Rasthaken 6 abragt, wobei die Vorsprünge der Rasthaken 6 einen Kreis 7 beranden, der einem Durchmesser einer umlaufenden Nut in einem Außenumfang des nicht dargestellten Einschlaghammers entspricht. Die Rasthaken 6 sind dazu ausgebildet, eine zeitweilige formschlüssige Verriegelung mit dem Einschlaghammer zu gewährleisten.

An einer Schneidenfläche 4, die an der Grundplatte 2 ausgebildet ist und die der Schlagfläche 3 abgewandt ist, sind rein exemplarisch zwei spiegelsymmetrisch zueinander angeordnete, wellenförmig ausgebildete Schneiden 8 vorgesehen. Die Schneiden 8 sind mit zunehmendem Abstand von der Schneidenfläche 4 verjüngt ausgebildet und bestimmen durch diese Verjüngung eine Schneidrichtung 9, die parallel zu einer nicht dargestellten Flächennormale der Schneidenfläche 4 ausgerichtet ist. Rein exemplarisch ist die Schneidenfläche 4 als Ebene ausgeführt und parallel zur Schlagfläche 3 ausgerichtet. Zwischen den beiden Schneiden 8 ist in die Schneidenfläche 4 eine Nut 10 eingebracht, die eine rein exemplarisch eben ausgebildete und auch als Nutgrund bezeichnete Grundfläche 11 und rechtwinklig dazu ausgerichtete Seitenwände 12, 13 bestimmt.

Ausgehend von der Grundfläche 11 erstrecken sich parallel zur Schneidrichtung 9 jeweils spitz zulaufende, insbesondere konusförmig ausgebildete, Zentrierspitzen 14. Die Zentrierspitzen 14 ragen in der Schneidrichtung 9 geringfügig über die Schneiden 8 hinaus. Hierdurch kann bei einem Auftreffen des Markierungselements 1 auf eine zumindest im Wesentlichen ebene Schnittfläche eines Baumstamms davon ausgegangen werden, dass zunächst die Zentrierspitzen 14 in Kontakt mit der Schnittfläche kommen und dadurch eine vorteilhafte vorläufige Festlegung des Markierungselements 1 erfolgt, bevor die Schneiden 8 in der Schneidrichtung 9 in die Schnittfläche des Baumstamms eindringen können.

Eine Tiefe 15 der Nut 10 wird durch einen Abstand zwischen der Schneidenfläche 4 und der Grundfläche 11 bestimmt und ist so gewählt, dass sie größer als eine Dicke 32 des Informationsträgers 31 ist. Ferner ist vorgesehen, dass der Informationsträger 31, vorzugsweise stoffschlüssig, insbesondere durch eine Verklebung, an der Grundfläche 11 der Nut 10 festgelegt ist, sodass davon ausgegangen werden kann, dass bei Anbringung des Markierungselements 1 an eine zumindest im Wesentlichen ebenen Schnittfläche eines Baumstamms ein Eindringvorgang der Schneiden 8 in die Schnittfläche dadurch beendet wird, dass die Schneidenfläche 4 in Anlage an die Schnittfläche kommt. Sofern dies der Fall ist und die Schnittfläche des Baumstamms keine in die Nut 10 hineinragenden Vorsprünge aufweist, wird ein nicht näher dargestellte Abstand zwischen dem Informationsträger 31 und der Schnittfläche eingehalten, der sich als Differenz aus der Tiefe 15 der Nut 10 und der Dicke 32 des Informationsträgers 31 ergibt. Hierdurch kann davon ausgegangen werden, dass der Informationsträger 31 sowohl während der Durchführung des Einschlagvorgangs als auch anschließend an den Einschlagvorgang nicht in unmittelbarem mechanischen Kontakt mit der Schnittfläche des Baumstamms kommt und dadurch die Funktionsfähigkeit des Informationsträgers 31 nicht in Frage gestellt wird.

Der streifenförmig ausgebildete Informationsträger 31 weist rein exemplarisch einen Folien-Schichtaufbau aus einer Trägerfolie 33 und einer Abdeckfolie 34 auf. Gemäß der Darstellung der Figur 8 ist die Abdeckfolie 34 teilweise abgeschnitten dargestellt. Beispielhaft ist vorgesehen, dass sowohl die Trägerfolie 33 als auch die Abdeckfolie 34 aus einem flexiblen Kunststoffmaterial hergestellt sind und zumindest bereichsweise stoffschlüssig miteinander verbunden sind. Ferner ist vorgesehen, dass zwischen der Trägerfolie 33 und der Abdeckfolie 34 ein in Halbleitertechnologie hergestellter Speicherbaustein 35 sowie eine elektrisch mit dem Speicherbaustein 35 verbundene, vorzugsweise aus einer Metallfolie hergestellte Antenne 36 angeordnet sind. Beispielhaft ist vorgesehen, dass der Speicherbaustein 35 elektrisch leitend auf einen ersten Antennenbereich 37 aufgesetzt ist und über einen Bonddraht 39 elektrisch mit einem zweiten Antennenbereich 38 verbunden ist. Die Gestaltung der Antenne 36 gemäß der Figur 8 entspricht nicht der tatsächlichen Ausführung der Antenne, sondern dient lediglich der Erläuterung eines potenziellen Aufbaus für den Informationsträger 31.

Eine Breite 40 des Informationsträgers 31 ist kleiner als eine Breite 17 der Nut 10. Eine Länge 41 des Informationsträgers 31 ist größer als eine Längenerstreckung 18 der Nut 10, sodass der Informationsträger 31 seitlich über die Schlagfläche 3 und die Schneidenfläche 4 der Grundplatte 2 abragt. Beispielhaft ist vorgesehen, dass der Informationsträger 31 beidseitig über die Grundplatte 2 abragt und dass die Länge 41 des Informationsträgers 31 ungefähr 50 Prozent größer als eine Ausdehnung 19 der Grundplatte 2 in Richtung der Nut 10 ist.

Rein exemplarisch ist vorgesehen, dass der Informationsträger 31 mit kreisförmigen Ausnehmungen 42 versehen ist, durch die bei einer Anbringung des Informationsträgers 31 an der Grundfläche 11 der Nut 10 die Zentrierspitze 14 hindurch ragen können.

Ferner ist vorgesehen, dass der Informationsträger 31 mit einem zentralen Abschnitt 43 flächig an der Grundfläche 11 der Nut 10 anliegt und rein exemplarisch beidseitig gegenüber dem zentralen Abschnitt 43 in spitzem Winkel 45 abgeknickte Antennenabschnitte 44 aufweist. Beispielhaft ist vorgesehen, dass bei der Antennenabschnitt der 44 jeweils einen Winkel 45 mit der Schlagfläche 3 der Grundplatte 2 einnehmen, der ungefähr 45 Grad beträgt. Aufgrund des Umstands, dass sich die Antennenabschnitte 44 ausgehend von der Anordnung des zentralen Abschnitts 43 an der Grundfläche 11 der Nut 10 über die Schlagfläche 3 hinaus erstrecken, wird bei einem bestimmungsgemäßen Gebrauch des Markierungselements 1 sichergestellt, dass die Antennenabschnitte 44 nicht in mechanischem Kontakt mit der Schnittfläche des Baumstamms kommen, wodurch eine vorteilhafte Funktionsfähigkeit für die Antenne 36 gewährleistet werden kann.

Um diese räumliche Ausrichtung der Antennenabschnitt dem 44 gegenüber dem zentralen Abschnitt 43 dauerhaft gewährleisten zu können, ist eine mechanische Zwangsführung für den streifenförmig ausgebildeten Informationsträger 31 an der Grundplatte 2 vorgesehen.

Bei der Ausführungsform des Markierungselements 1 gemäß den Figuren 1 bis 5 wird diese Zwangsführung durch jeweils endseitig an die Nut 10 angrenzende, schlitzförmige Öffnungen 20 erzielt, die in der Grundplatte 2 eingebracht sind. Diese ausgehend von der Grundfläche 11 der Nut 10 bis zur Schlagfläche 3 durchsetzen. Eine Breite 22 der schlitzförmige Öffnung 20 ist größer gewählt als die Breite 40 des Informationsträgers 31. Eine Länge 21 der schlitzförmige Öffnung 20 ist größer gewählt als Dicke 32 des Informationsträgers 31.rein exemplarisch ist vorgesehen, dass ein Übergang zwischen der schlitzförmigen Öffnung 20 und der Schlagfläche 3 zumindest einseitig mit einer Fase 23 versehen ist, sodass der Informationsträger 31 auf einer von der Fase 23 bestimmten Schrägfläche zur Anlage kommen kann.

Bei der schlitzförmigen Öffnung 20 handelt es sich um eine Ausnehmung, also einen Durchbruch in der Grundplatte 2 mit einer vollständig geschlossenen Seitenwand 24. Durch eine solche Gestaltung der schlitzförmigen Öffnung 20 wird eine sichere Aufnahme des Informationsträgers 31 gewährleistet, ein Herausrutschen eines Antennenabschnitts 44 während eines bestimmungsgemäßen Gebrauchs des Markierungselements 1 ist ausgeschlossen. Allerdings erfordert diese geometrische Gestaltung der schlitzförmigen Öffnung 20 einen Montagevorgang, bei dem der Informationsträger 31 zeitgleich mit der stoffschlüssig in Festlegung an der Grundplatte 2 mit den jeweiligen Antennenabschnitten 44 durch die jeweilige schlitzförmige Öffnung 20 geführt werden muss.

Bei der zweiten Ausführungsform des Markierungselements 51, wie sie in den Figuren 6 und 7 dargestellt ist, weist die Grundplatte 52 anstelle der schlitzförmigen Öffnungen, wie sie bei der Grundplatte 2 vorgesehen sind, spiegelsymmetrisch zueinander angeordnete Haltehaken 74 auf, die jeweils einen Führungsschlitz 70 bestimmen, der zur Aufnahme eines Randbereichs des Informationsträgers 31 ausgebildet ist. Beispielhaft ist vorgesehen, dass eine Länge 71 des Führungsschlitzes 70 größer als eine Dicke 32 des Informationsträgers 31 ist. Ferner ist rein exemplarisch vorgesehen, dass eine Breite 72 des Führungsschlitzes 70 ungefähr 10 Prozent der Breite 40 des Informationsträgers 31 beträgt.

Vorteilhaft bei der Gestaltung der Grundplatte 52 ist es, dass bei der Montage des Informationsträgers 31 zunächst die, insbesondere stoffschlüssige, Verbindung zwischen dem zentralen Abschnitt 43 des Informationsträgers 31 und der Grundfläche 11 der Nut 10 erzeugt werden kann und in einem nachfolgenden Schritt die Antennenabschnitte 44 in die jeweiligen Führungsschlitze 70 eingefädelt werden können. Dieser Vorteil bei der Montage des Markierungselements 51 bringt mit sich, dass selbst bei einem bestimmungsgemäßen Gebrauch für das Markierungselement 51 einer oder beide der Antennenabschnitte 44 aus den Haltehaken 74 ausgehakt werden können, wodurch sich enthält die räumliche Ausrichtung der Antennenabschnitte 44 gegenüber dem zentralen Abschnitt 43 verändern kann. Diese Problemstellung kann dadurch entgegengewirkt werden, dass der Informationsträger 31 bereits vor der Montage an die Grundplatte 52 durch plastische Deformation (Abknickung) derart vorgeformt wird, dass selbst ein Aushaken des Informationsträgers 31 aus den Haltehaken 74 nicht zu einer erheblichen Änderung der räumlichen Gestalt des Informationsträgers 31 führt.

## Patentansprüche

1. Markierungselement (1; 51) für Baumstämme, mit einer Grundplatte (2; 52), die eine Schlagfläche (3) und eine der Schlagfläche (3) abgewandte Schneidenfläche (4) aufweist, wobei eine Schneide (8) von der Schneidenfläche (4) abragt und wobei an der Grundplatte (2; 52) ein elektronischer Informationsträger (31) angebracht ist, der einen Speicherbaustein (35) und eine Antenne (36) aufweist, die elektrisch mit dem Speicherbaustein (35) verbunden ist, **dadurch gekennzeichnet, dass** die Antenne (36) einen Antennenabschnitt (44) aufweist, der seitlich über die Schlagfläche (3) und über die Schneidenfläche (4) abragt.

2. Markierungselement (1; 51) nach Anspruch 1, **dadurch gekennzeichnet, dass** der Informationsträger (31) eine Trägerfolie (33) umfasst, wobei der Speicherbaustein (35) und die Antenne (36) auf die Trägerfolie (33) aufgebracht sind.

3. Markierungselement (1; 51) nach Anspruch 2, **dadurch gekennzeichnet, dass** der Speicherbaustein (35) und die Antenne (36) zwischen der Trägerfolie (33) und einer Abdeckfolie (34) angeordnet sind.

4. Markierungselement (1; 51) nach einem der vorhergehenden Ansprüche, **dadurch gekennzeichnet, dass** an einem Randbereich der Grundplatte (2; 52) eine schlitzförmige Öffnung (20; 70) ausgebildet ist und dass der Informationsträger (31) die schlitzförmige Öffnung (20; 70) durchsetzt.

5. Markierungselement (1; 51) nach Anspruch 4, **dadurch gekennzeichnet, dass** die schlitzförmige Öffnung (20; 70) als Ausnehmung mit einer durchgehenden Seitenwand (23) in der Grundplatte (2; 52) ausgebildet ist und einen Abschnitt des Informationsträgers (31) umrahmt.

6. Markierungselement (1; 51) nach Anspruch 4, **dadurch gekennzeichnet, dass** die schlitzförmige Öffnung (70) als seitlich offene Aussparung in der Grundplatte (2; 52) ausgebildet ist und einen Abschnitt des Informationsträgers (31) bereichsweise umgibt.

7. Markierungselement (1; 51) nach einem der vorhergehenden Ansprüche, **dadurch gekennzeichnet, dass** in der Schlagfläche (3) eine Nut eingebracht ist, in der der Informationsträger (31) angeordnet ist, wobei eine Tiefe der Nut größer als eine Dicke (32) des Informationsträgers (31) ist.

8. Markierungselement (1; 51) nach einem der Ansprüche 1 bis 6, **dadurch gekennzeichnet, dass** in der Schneidenfläche (4) eine Nut (10) eingebracht ist, in der der Informationsträger (31) angeordnet ist, wobei eine Tiefe (15) der Nut (10) größer als eine Dicke (32) des Informationsträgers (31) ist.

9. Markierungselement (1; 51) nach einem der vorhergehenden Ansprüche, **dadurch gekennzeichnet, dass** der Antennenabschnitt (44) mit der Schlagfläche (3) einen Winkel (45) einschließt, der in einem Intervall zwischen 10 Grad und 70 Grad angesiedelt ist.

10. Markierungselement (1; 51) nach einem der vorhergehenden Ansprüche, **dadurch gekennzeichnet, dass** von der Schlagfläche (3) mehrere Rasthaken (6) abragen, die für eine formschlüssige Festlegung der Grundplatte (2; 52) an einem Schlaghammer ausgebildet sind.

11. Markierungselement (1; 51) nach einem der vorhergehenden Ansprüche, **dadurch gekennzeichnet, dass** an der Schneidenfläche (4) eine Zentrierspitze (14) ausgebildet ist, die in einer quer zur Schneidenfläche (4) ausgerichteten Schneidrichtung () eine größere Ausdehnung als die Schneide (8) aufweist und dass der Informationsträger (31) mit einer Ausnehmung (42) versehen ist, die von der Zentrierspitze (14) durchsetzt werden kann.

12. Markierungselement (1; 51) nach einem der vorhergehenden Ansprüche, **dadurch gekennzeichnet, dass** der Speicherbaustein (35) zwei Speicherplätze zur Speicherung von unterschiedlichen Informationen aufweist.

13. Markierungselement (1; 51) nach einem der vorhergehenden Ansprüche, **dadurch gekennzeichnet, dass** der Informationsträger (31) als RFID ausgebildet ist.

14. Markierungselement (1; 51) nach einem der vorhergehenden Ansprüche, **dadurch gekennzeichnet, dass** die Schlagfläche (3) als Planfläche ausgebildet ist und die Schneidenfläche (4) bereichsweise parallel zur Schlagfläche (3) ausgerichtet ist.

15. Markierungselement (1; 51) nach einem der vorhergehenden Ansprüche, **dadurch gekennzeichnet, dass** die Grundplatte (2; 52) als Kunststoffspritzgussteil ausgebildet ist.
